# EUROPEAN PATENT SPECIFICATION

(11) **EP 3 125 105 B1**
(45) Date of publication and mention of the grant of the patent: **08.09.2021**
(21) Application number: 16171454.8
(22) Date of filing: 26.05.2016
(51) Int. Cl.: H04N 1/00, H04N 1/44, G06F 3/12

(54) **IMAGE FORMING APPARATUS AND DISPLAY METHOD OF THE IMAGE FORMING APPARATUS**
BILDERZEUGUNGSVORRICHTUNG UND ANZEIGEVERFAHREN DER BILDERZEUGUNGSVORRICHTUNG
APPAREIL DE FORMATION D'IMAGE ET PROCÉDÉ D'AFFICHAGE ASSOCIÉ

(30) Priority: 30.07.2015 US 201514813401
(43) Date of publication of application: 01.02.2017
(73) Proprietor: Kabushiki Kaisha Toshiba, Tokyo 105-8001 (JP); Toshiba TEC Kabushiki Kaisha, Tokyo 141-0032 (JP)
(72) Inventor: SUZUKI, Minoru, Shinagawa-ku, Tokyo 141-0032 (JP)
(74) Representative: Bandpay & Greuter

(56) References cited:
- US-A1- 2014 123 023
- US-A1- 2015 055 168
- None

## Description

### FIELD

Embodiments described herein relate generally to an image forming apparatus or system, and a display method of the image forming apparatus.

### BACKGROUND

Conventionally, an MFP (multi-functional peripheral) incorporates a plurality of devices that can carry out compound control operations.

The MFP cannot process a "print" job and a "copy" job through a network at the same time.

On the other hand, the MFP is possible to process a "scan" job and a "print" job at the same time. The MFP can enable the user to use a "FAX transmission" operation as well as the "print" operation. Further, the MFP can enable the user to use a "mail transmission" operation as well as the "copy" operation.

However, the MFP doesn't inform that the user can use other operations different from the "print" operation during the "print" operation.

The user waits for print output after activating print jobs respectively.

Other users come to the MFP for operations such as "scan", "FAX" and the like different from the "print" operation.

During the execution of print operation, it is possible for the MFP to execute the "scan" operation and the "FAX" operation as well as the "print" operation.

However, the user needs to wait for his/her turn. The user waits for an operation chance until the print operation that is being executed is ended.

The MFP cannot run the plurality of devices efficiently, which hinders the improvement of operation efficiency of devices.

Document US 2014/123023 describes an information processing apparatus which captures image in front of an operation unit with a camera, identifies one target user as a login user among plural users based on priority for each user and displays a user interface for the target user. The priority refers to a size of face a user in captured image data, or a distance between one user and the operation unit. Such an apparatus allows an authentication process to determine the target user, even if the authentication process detects plural users, but cannot inform one or more users waiting for operations to access the apparatus currently executing a job of another job category simultaneously executable with the job.

Document US 2015/055168 describes a system which assigns operation authority of one of plural devices to one user among multiple users by detecting gesture by the user toward the device. Each device has a gesture recognition section which identifies the user by employing facial recognition and hand gestures, respectively using cameras. The system notifies the user completion of selection toward the target device by recognizing meaning of the gestures by the identified user. Such a system allows multiple users to select a specific device and operate the device according to his/her gesture, but the system limits one user of the specific device to particular user or users. The system cannot inform one or more users waiting for operations to access one device currently executing a job of another job category simultaneously executable with the job.

To solve such problems, there is provided an image forming apparatus according to claim 1.

The invention also relates to a display method of the image forming apparatus according to claim 5.

### BRIEF DESCRIPTION OF THE DRAWINGS

The above and other objects, features and advantages of the present invention will be made apparent from the following description of the preferred embodiments, with reference to the accompanying drawings, in which:
Fig. 1 is a diagram illustrating the constitution of an image forming apparatus according to an embodiment;
Fig. 2 is a functional block diagram of the image forming apparatus according to the embodiment;
Fig. 3 is a diagram illustrating a memory table of a job management section of the image forming apparatus according to the embodiment;
Fig. 4 is a flowchart illustrating display operations of the image forming apparatus according to the embodiment;
Fig. 5 is a diagram planarly illustrating a visual field range of a camera used in the image forming apparatus according to the embodiment;
Fig. 6A is a diagram illustrating a first registration job of a job management section of the image forming apparatus according to the embodiment;
Fig. 6B is a diagram illustrating a second registration job of a job management section of the image forming apparatus according to the embodiment;
Fig. 7A is a diagram illustrating a correspondence relation of a database of the image forming apparatus according to the embodiment;
Fig. 7B is a diagram illustrating an example of storage content of face images in Fig. 7A;
Fig. 8 is a diagram illustrating a first display example of a display section of the image forming apparatus according to the embodiment;
Fig. 9 is a diagram illustrating a second display example of the display section of the image forming apparatus according to the embodiment; and
Fig. 10 is a diagram illustrating a third registration job of the job management section of the image forming apparatus according to the embodiment.

### DETAILED DESCRIPTION

Certain embodiments provide an image forming apparatus, comprising: a plurality of devices configured to carry out compound control action; a job management section configured to store identification information of a job registered user using more than one of the plurality of devices in association with a job category; an authentication section configured to identify a user in the vicinity of the apparatus through a personal authentication separately from the job management section; a determination section configured to determine user identification information different from the identification information of the registrant among the user identification information of a plurality of users identified by the authentication section and other job categories that can be used in the execution of the job; and a display section configured to display the user identification information and the other job categories.

Hereinafter, an image forming apparatus and a display method of the image forming apparatus according to the embodiment are described in detail with reference to the accompanying drawings. Further, same components in each figure are applied with the same reference numerals, and therefore the description thereof is not provided.

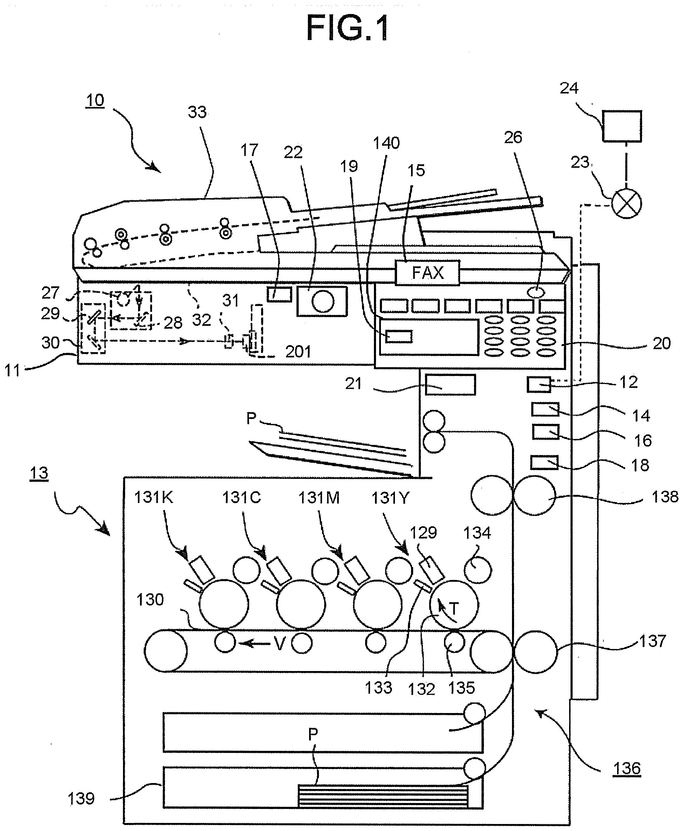

Fig. 1 is a diagram illustrating the constitution of an image forming apparatus according to the embodiment.

An MFP 10 comprises a plurality of devices including a scanner 11, a network interface 12, a print section 13, a storage 14, a FAX device 15 and the like.

The scanner 11, the network interface 12, the print section 13, the storage 14, and the FAX device 15 are devices.

For example, the scanner 11 and the print section 13 are capable of carrying out compound control operations.

The "capable of carrying out compound control operations" refers to capable of executing jobs such as the print job, the copy job and the like simultaneously.

The MFP 10 comprises a job management section 16, an authentication section 17, a determination section 18, a display section 19, a control panel 20, a main controller 21 and a camera 22.

The job management section 16 stores identification information of a job registered user using more than one of the devices such as the scanner 11, the print section 13 and the like in association with a job category.

The MFP 10 may use, for example, a staff ID (identification) as the identification information.

The authentication section 17 identifies a user in the vicinity of the MFP 10 through a face authentication separately from the job management section 16. The authentication section 17 authenticates an individual through the face authentication with the camera 22.

The "in the vicinity of the MFP 10" refers to a space in a range in which an authentication success rate of the authentication section 17 higher than a desired threshold value can be obtained among all the spaces around the MFP 10.

The determination section 18 determines user identification information different from the identification information of the job registrant among the plurality of user identification information identified by the authentication section 17 and other job category that can be used during the execution of job.

The other job category is, for example, a FAX transmission job of a user B during a period of time a user A is carrying out a print job of a large number of pages.

The display section 19 displays the user identification information and the other job category.

The scanner 11 scans documents from an ADF (Automatic Document Feeder) 33. The ADF 33 presses a document against a glass plate 32.

The scanner 11 reflects light from a light source 27 on the glass plate 32. The reflected light is received by a CCD (charge coupled device) sensor 201 through mirrors 28, 29 and 30 and a lens 31.

The network interface 12 receives print request from a PC (personal computer) 24 through a network 23. The network interface 12 is an LAN (local area network) card.

The print section 13 is a print engine which prints and outputs an image with four print colors (C, M, Y and K).

The print section 13 comprises four exposure devices 129, image forming sections 131C, 131M, 131Y and 131K, and a belt 130.

The exposure device 129 modulates a laser light of a semiconductor laser of each color through an image signal. The belt 130 travels endlessly in an anticlockwise direction V.

The image forming section 131Y for forming a yellow image is provided with a drum 132, a charger 133, a developing device 134 and a transfer device 135.

The drum 132 is a photoconductor drum which rotates in a clockwise direction T.

The charger 133 charges the surface of the drum 132.

The developing device 134 develops an electrostatic latent image on the drum 132 with toner.

The transfer device 135 primarily transfers a toner image on the drum 132 to the belt 130.

Each of the constitutions of the image forming section 131M for forming a magenta image, the image forming section 131C for forming a cyan image and the image forming section 131K for forming a black image are substantially identical to the constitution of the image forming section 131Y.

Further, the print section 13 is provided with a sheet conveyer 136, a secondary transfer device 137, and a fixing device 138.

The sheet conveyer 136 guides a sheet P from a tray 139 to the print section 13.

The secondary transfer device 137 transfers a four-color toner image formed by the image forming sections 131C, 131M, 131Y and 131K to the sheet P secondarily.

The fixing device 138 fixes the toner image that has not been fixed yet on the sheet P.

The FAX device 15 serving as a device sends an image through a FAX. The FAX device 15 also receives an image through a FAX.

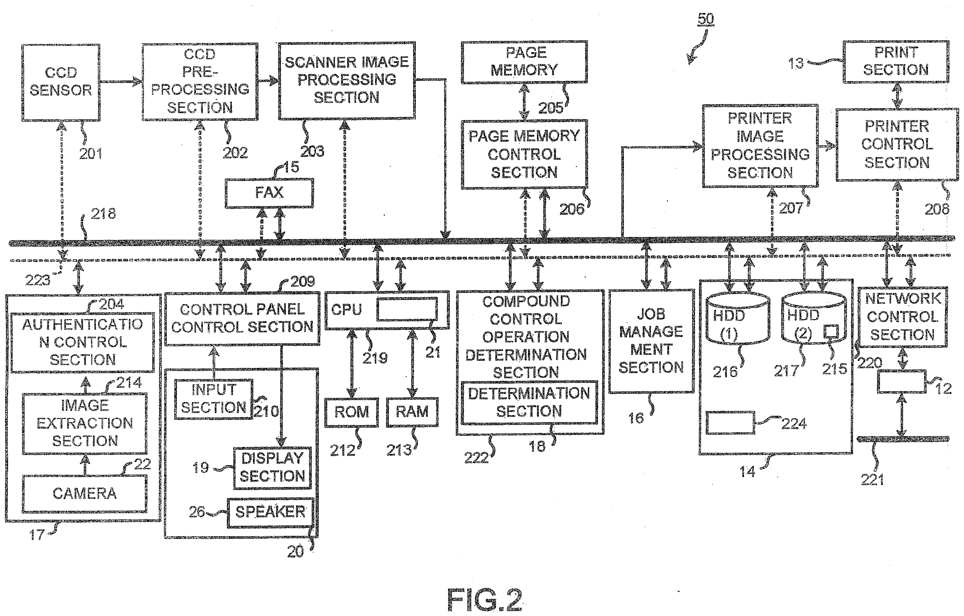

Fig. 2 is a functional block diagram of an image forming apparatus according to the embodiment. The reference numerals described above represent same components as those shown in Fig. 1. Fig. 2 mainly illustrates a control system 50 of the MFP 10.

The control system 50 includes an ROM (read only memory) 212, an RAM (random access memory) 213, and a CPU (central processing unit) 219 on a bus 218 and a bus 223.

The buses 218 and 223 are common data buses.

The ROM 212 stores programs.

The CPU 219 controls the RAM 213 according to the programs. The CPU 219 outputs signals indicating setting and instruction to each device (the print section 13 and the like) through the buses 218 and 223.

The CPU 219 reads out a processing result of each device. The CPU 219 executes the functions of the main controller 21. The CPU 219 collectively controls the whole control system 50 of the MFP 10.

The RAM 213 provided a storage area for operation to the CPU 219. The RAM 213 generates a memory table for managing jobs of the OS.

The job management section 16 stores a list of processing operations such as the print job registered through the PC 24 via the network 23. The job management section 16 manages the processing operations according to the job categories.

The job management section 16 uses a job management table 25 of the OS.

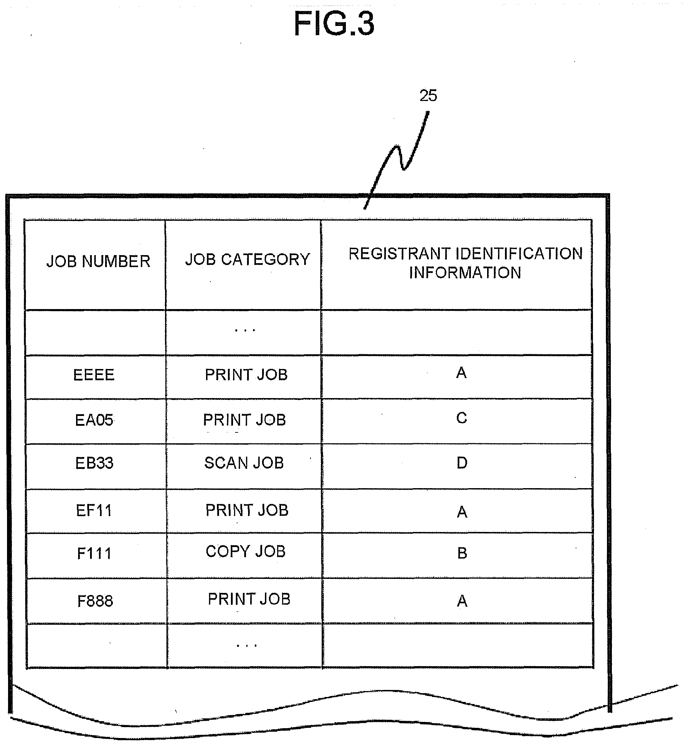

Fig. 3 is a diagram illustrating an example of the job management table of the job management section 16. The reference numerals described above represent same components as those shown in Fig. 1 and Fig. 2.

The job categories refers to a copy job, a print job, a scan job, an FAX transmission job, an FAX reception job, a mail transmission job and a mail reception job.

The copy job is a job printing the data scanned through the scanner 11 with the print section 13.

The print job is a job printing a print spool data from the PC 24 with the print section 13.

The scan job is a job sending the scanned data to a remote server through the network 23.

The scan job includes a job mailing the scanned data to an address. The scan job also includes a job storing the scanned data in the storage 14.

The FAX transmission job is a job transmitting the scanned data through a FAX.

The FAX reception job is a job printing the image data received by the FAX device 15 with the print section 13.

The mail transmission job is a job mailing the file stored in the storage 14 to an address. The mail transmission job also includes a job mailing a scanned image to an address.

The mail reception job is a job receiving a mail.

Further, in Fig. 2, a first HDD (hard disk drive) 216 and a second HDD (hard disk drive) 217 are used in the storage 14.

The HDD 216 stores various kinds of files generated when the MFP 10 carries out processing. For example, the HDD 216 stores a scanned file.

The HDD 217 may store a database 215 for authentication. The database 215 stores a plurality of face images and corresponding user identification information in an associated manner.

The database 215 stores the face image, the user identification information and user feature information in an associated manner.

Any of the HDDs 216 and 217 stores an OS (operating system) and a plurality of pieces of application software.

The OS manages the generation of jobs through a plurality of devices (the scanner 11 and the print section 13).

The FAX device 15 may store the image data received through a FAX in the storage 14.

The authentication section 17 authenticates an individual through the face authentication with the camera 22.

The camera 22 acquires an image including a user in the vicinity of the MFP 10. The camera 22 has a wide field of view (angle of view).

For example, a CMOS (complementary MOS) image sensor is used in the camera 22.

The authentication section 17 comprises an image extraction section 214 and an authentication control section 204.

The image extraction section 214 detects a person according to the image data from the camera 22. The image extraction section 214 extracts feature information for indentifying a face from the image data.

The authentication control section 204 may output an image capturing timing signal to the camera 22.

The authentication control section 204 outputs user identification information through the face authentication according to the captured image from the camera 22 and the face image of the database 215.

The authentication control section 204 compares the feature information extracted by the image feature section 214 with feature information of the user registered in the second HDD 217 in advance. The authentication control section 204 identifies a user according to the comparison result to authenticate the user.

Further, the determination section 18 determines identification information representing a non-registered user who has not been registered in the job management section 16 yet among the plurality of users identified by the authentication section 17 as the user identification information.

The determination section 18 may rank orders for user identification information of a plurality of users obtained as the determination results.

The determination section 18 selects other job category that can be used by the non-registered user when a job is being executed.

The determination section 18 selects a job category that can be processed in parallel to a job category that has been registered in the job management section 16 as the other job category.

The determination section 18 may be arranged in a compound control section determination section 222.

The functions required to determine compound control operations other than the functions of the determination section 18 are executed by the compound control section determination section 222.

The compound control section determination section 222 is executed through cooperation of the CPU 219, the ROM 212 and the RAM 213.

The MFP 10 includes the display section 19 on the control panel 20. The display section 19 displays, for example, a user name and information such as "scan is available".

The MFP 10 may include a speaker 26 in the control panel 20. The speaker 26 outputs the user identification information and the job category through sound with an amplifier.

The control panel 20 includes an input section 210. The input section 210 includes buttons and numeric keys for receiving operations of users.

The control system 50 is provided with a control panel control section 209.

The control panel control section 209 controls the input section 210 and a display section 211. The control panel control section 209 controls a display of screen, a switch of screen on the control panel 20 and an input of operations of the user.

The control system 50 includes a network control section 220 for controlling a network communication.

The control system 50 includes a printer image processing section 207.

The printer image processing section 207 executes a filtering processing and a gradation processing on the image data to be sent to the print section 13.

The printer control section 208 controls a printing operation of the print section 13.

The control system 50 includes a CCD sensor 201, a CCD pre-processing section 202, a scanner image processing section 203, a page memory 205, and a page memory control section 206.

The CCD sensor 201 is a four-line CCD in the scanner 11. The CCD sensor 201 reads a document in the horizontal scanning direction through CCD elements. The CCD sensor 201 converts the read document into image data through a scanning in the vertical scanning direction.

The CCD pre-processing section 202 converts an analog signal of four-color from the CCD sensor 201 into a digital signal.

The CCD pre-processing section 202 generates a driving signal of the CCD elements.

The scanner image processing section 203 corrects the bending of a curve representing characteristics of the CCD elements. The scanner image processing section 203 carries out an image processing required in next stage processing. For example, the processing is a correction of the lens 31 and the like, a range correction, a filter processing and the like.

The page memory 205 stores page data of one page or more than one page of the document.

The page memory control section 206 controls read access and write access to the page memory 205.

A part of components shown in Fig. 2 is according to the control procedure of the buses 218 and 223. For example, the main controller 21 mediates data transmission between components.

Each component of the control system 50 is realized through a semiconductor circuit such as an LSI (large scale integration) and the like. The control system 50 may be realized through software partially or wholly.

Further, a display method of the image forming apparatus according to the present embodiment is a method notifying a user from the MFP 10.

The main controller 21 enables the job management section 16 to register a job using the print section 13, the scanner 11 and the like.

The main controller 21 enables the authentication section 17 to execute a face authentication for a user in the vicinity of the MFP 10.

The main controller 21 enables the determination section 18 to determine whether or not the user identified through the face authentication has been registered in the job management section 16.

The main controller 21 sends a control signal to the control panel 20.

The main controller 21 enables the display section 19 to display user identification information and other job category that can be used in the execution of the job for a non-registered user who has not been registered in the job management section 16 yet.

In the determination, in a case in which it is determined that user identification information of a plurality of users is obtained, the determination section 18 may rank orders for the user identification information of the plurality of users.

In the determination, the determination section 18 assigns a job category processed in parallel to the job category from the job management section 16 to user identification information.

In the execution of the face authentication, the authentication section 17 photographs the user through the camera 22.

The authentication section 17 obtains a face image from the photographed image and retrieves the database 215.

The authentication section 17 lists the user identification information of the plurality of users through a face authentication of the face image.

Next, the operation actions of the MFP 10 with the constitution described above are described.

### (A) A case in which a user B and a user C use the MFP 10 after a job of a user A is registered

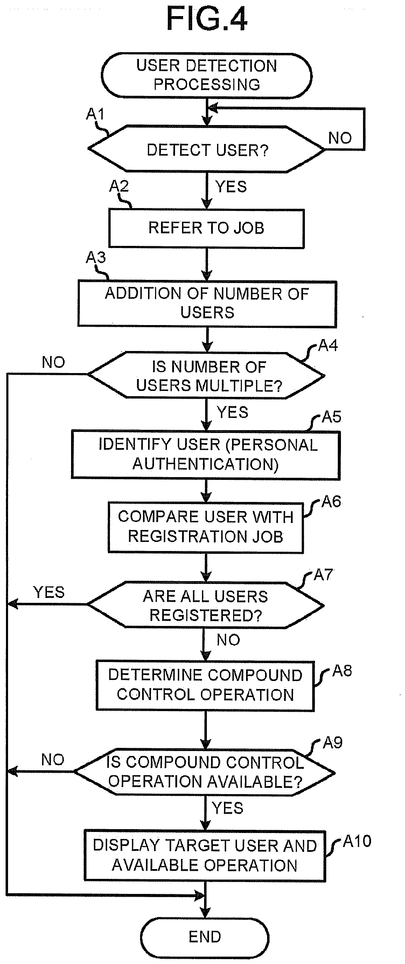

Fig. 4 is a flowchart illustrating display operations of the MFP 10. The authentication section 17 continues a detection processing of a user.

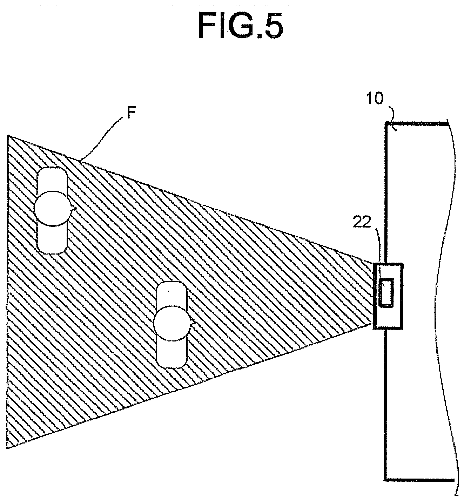

Fig. 5 is a diagram planarly illustrating a visual field range of the camera 22. The reference numerals described above represent same components as those shown in Fig. 1∼Fig. 4.

A visual field range F of the camera 22 is a stereo range. A user positioned in the vicinity of the MFP 10 is contained in the range. The camera 22 outputs a planar image area from the stereo visual field range F. The image area is a still image or a moving image.

The image extraction section 214 detects an area of a moving target in the image area. The image extraction section 214 extracts the head of a person according to the size of a target in a changed area.

Further, in ACT A1 in Fig. 4, the authentication section 17 repeats the processing in ACT A1 during a period of time a user isn't detected (NO in ACT A1).

If the authentication section 17 detects a user in ACT A1 (YES in ACT A1), the authentication section 17 and the job management section 16 refer to the job management table 25 in ACT A2.

It is assumed that the job management section 16 has registered the print jobs in the OS through the reception of a print request from the PC 24 of the user A in the network interface 12 prior to ACT A1.

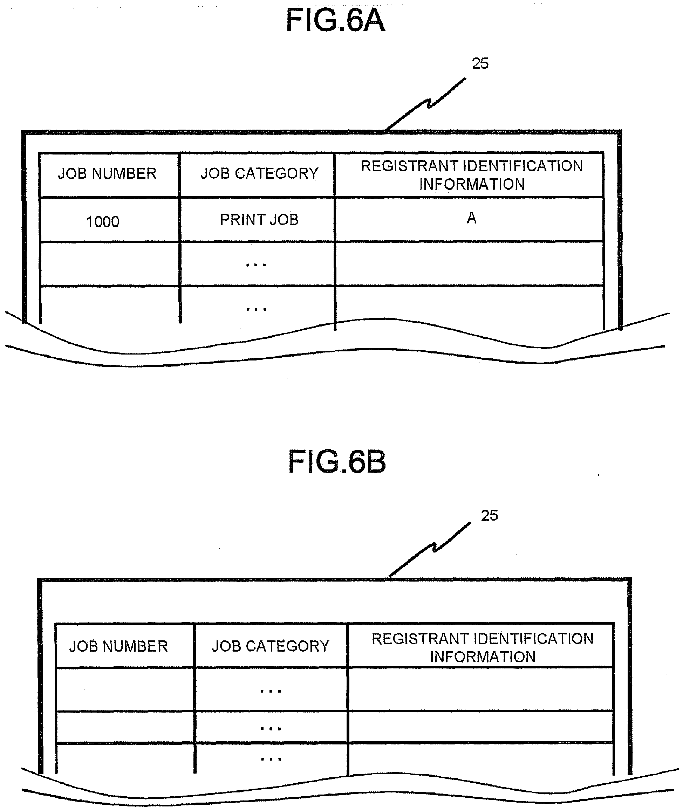

Fig. 6A is a diagram illustrating a first registration job of the job management section 16. The reference numerals described above represent same components as those shown in Fig. 1∼Fig. 5.

In ACT A2, the job management section 16 detects a print job of the user A (registrant identification information and notation).

On the other hand, the user B approaches the MFP 10 for a copy operation.

The user C approaches the MFP 10 for a FAX transmission operation.

In ACT A3, the authentication section 17 adds the number of users in the vicinity of the MFP 10 and the number of the job registered users.

In ACT A4, the authentication section 17 determines whether or not the number of users is more than one according to the addition result.

In ACT A4, the authentication section 17 determines that the number of users is 2 or more than 2.

Herein, if it is determined in ACT A4 that the number of users is 1 (NO in ACT A4), the authentication section 17 terminates the processing.

If the number of the users is 1, the MFP 10 is not occupied by a job of other people.

If the authentication section 17 detects that the number of the users is 2 in ACT A4 (YES in ACT A4), the authentication section 17 identifies two users respectively through a face authentication in ACT A5.

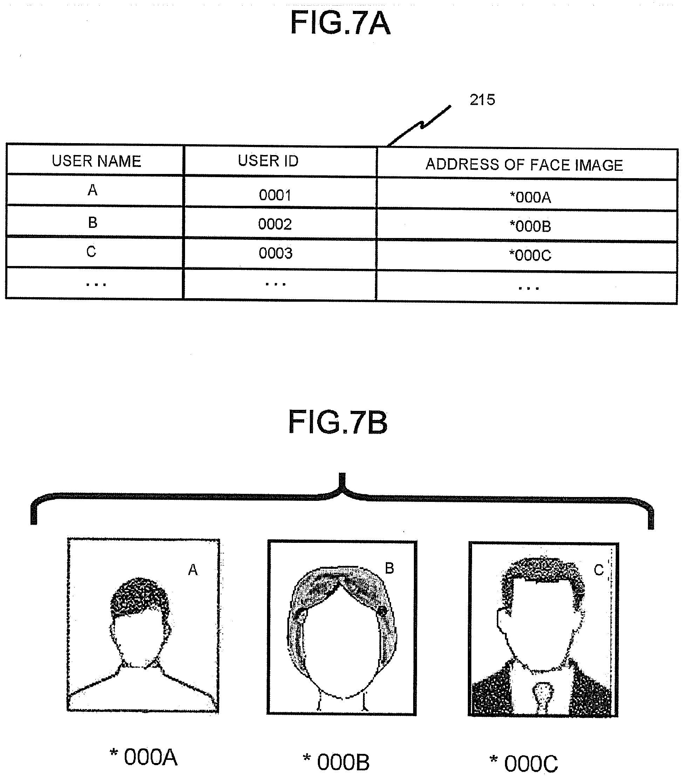

Fig. 7A is a diagram illustrating a correspondence relation of the database 215. User IDs and user identification information are represented.

Fig. 7B is a diagram illustrating an example of storage content of face images in Fig. 7A. The reference numerals described above represent same components as those shown in Fig. 1∼Fig. 6. Fig. 7B is an example of images stored in the address (address pointer) of the database 215. The "*000A" and the like indicates an address pointer.

In ACT A5, the image extraction section 214 extracts, for example, a contour line, and elements such as eyes, mouth, nose, ears, hairstyle, ornaments, color and the like within the contour line, and converts the feature points of the elements into numerical values.

In ACT A5, the authentication section 17 detects the user B and the user C. It is detected that the user B and the user C are positioned in the vicinity of the MFP 10.

In ACT A5, the main controller 21 or the OS calls the determination section 18 through an interruption to the bus 218 from the authentication section 17.

Sequentially, the determination section 18 determines whether or not the user B and the user C are respectively a registrant of which the job has been registered in ACT A6.

In ACT A6, the determination section 18 compares a registrant of a registration job such as a print job with the identified users B and C.

In ACT A7, the determination section 18 determines whether or not both the user B and the user C are registrant of jobs.

In ACT A7, the determination section 18 refers to the job management table 25. Alternatively, the determination section 18 enables the job management section 16 to determine whether or not the users B and C are registrants.

The determination section 18 determines whether or not all the identified users are users waiting for print output.

If the determination section 18 determines that neither of the users B and C is a registrant of job in ACT A7 (NO in ACT A7), the determination section 18 proceeds to the processing in ACT A8.

It is determined by the determination section 18 that the users B and C are persons who approach the MFP 10 for some unknown purposes.

In ACT A8, the determination section 18 determines whether or not there is a compound control operation that can be processed in parallel to a print operation.

In ACT A8, the determination section 18 determines that there is a compound control operation in which a scan, a FAX transmission/reception and a mail transmission/reception of the scanner 11 can be carried out simultaneously in parallel to the print operation.

Next, the determination section 18 confirms that the obtained operation category is available in ACT A9.

If the confirmation result is yes (YES in ACT A9), the main controller 21 displays a target user name and an operation name that can be used by the users B and C on the display section 19 in ACT A10.

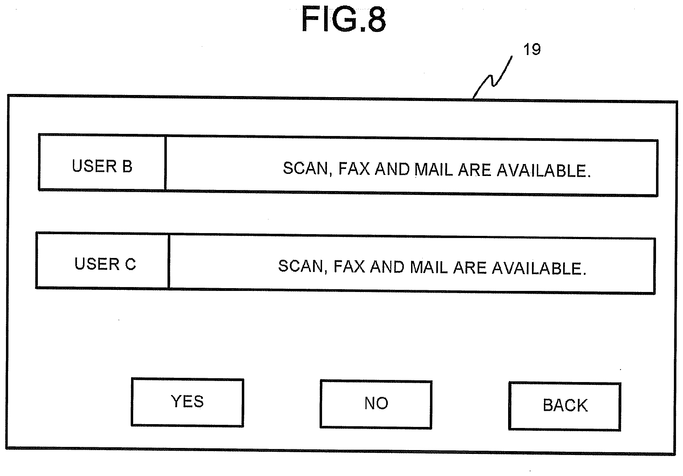

Fig. 8 is a diagram illustrating an example of display of the display section 19 in a case in which the number of waiting users is more than one. The reference numerals described above represent same components as shown in Fig. 1∼Fig. 7.

The determination section 18 may replace the orders according to the result in which orders are ranked before and after the identification time between the users B and C.

In ACT A10, the main controller 21 may output the target user name and the operation name from the speaker 26 through a sound.

The user B sends a FAX when the user A is printing.

The user C checks a mail reception after the user B.

In this way, in a case in which a user of which the job has not been registered in the MFP 10 is positioned in the vicinity of the MFP 10, the MFP 10 can inform the user of other operations that are available.

It is always possible to promote a plurality of users to use available compound control operations.

### (B) A case in which there is a time difference between the arriving timings of the users B and C after the print job of the user A is registered

In ACT A3 described above, the authentication section 17 is not limited to detect a plurality of users simultaneously. A processing in a case in which the users B and C approach the MFP 10 with a time difference is described.

After the user B for a copy operation is detected by the authentication section 17 during the execution of the print job of the user A, the user C approaches the MFP 10 for a FAX transmission operation.

The authentication section 17 starts the processing in ACT A1 through a detection of the user B.

The authentication section 17 executes processing from ACT A2 to ACT A10.

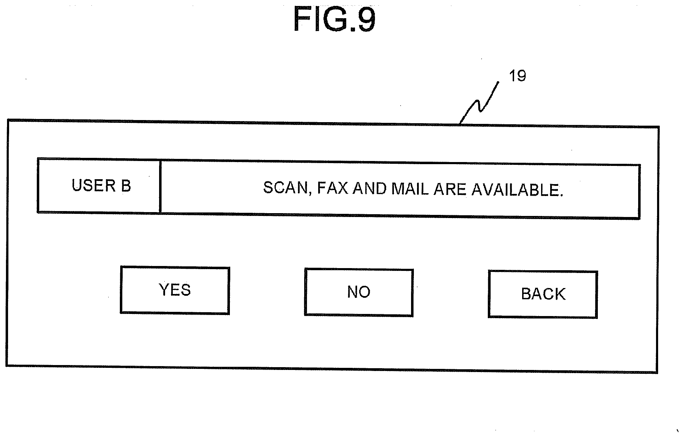

Fig. 9 is a diagram illustrating an example of display of the display section 19 in a case in which the number of waiting users is 1. The reference numerals described above represent same components as shown in Fig. 1∼Fig. 8.

The display section 19 displays the user B and an available operation name.

The authentication section 17 authenticates the user C after the user B.

During the execution of the print job of the user A, and during the execution of the processing of the user B, the authentication section 17 starts the processing in ACT A1 through a detection of the user C.

The authentication section 17 and the determination section 18 execute processing from ACT A2 to ACT A9 without carrying out branching processing in each processing.

In ACT A10, the display section 19 updates display content (Fig. 8).

For example, the user B sends a FAX when the User A is carrying out the print operation. The user C sends a FAX after the user B.

### (C) A case in which the user C carries out a print job when the user A is carrying out a print job and the user B is transmitting/receiving a FAX

The user A generates a print job.

The user B approaches the MFP 10 for a copy operation.

The user C generates a print job.

The job management section 16 registers print jobs of the users A and C before the processing in Fig. 4 is started.

If the authentication section 17 detects the user B through a detection processing, the authentication section 17 refers to the job management table 25 (ACT A2).

The authentication section 17 adds the detected number of users and the number of job registered users (ACT A3).

The authentication section 17 determines that the number of all the users is 3 (YES in ACT A4).

The authentication section 17 identifies the user B through the face authentication (ACT A5).

The determination section 18 determines whether or not the user B is a registrant (ACT A6 and ACT A7).

The determination section 18 determines whether or not there is other operation with respect to the print operation according to the negative result in ACT A7 (ACT A8).

The determination section 18 determines a scan, a FAX transmission/reception and a mail transmission/reception (YES in ACT A9).

The display section 19 displays the user B and an available operation name as shown in Fig. 9 (ACT A10).

The authentication section 17 carries out processing from ACT A1 to ACT A6 for the user C. In ACT A7, the authentication section 17 determines the user C not to be an authentication target. Then, the authentication section 17 terminates the processing.

The user B sends a FAX when the user A is carrying out a print job.

The user B doesn't carry out a print job. A display is guided for the user B.

The user C carries out a print job. No display is guided for the user C.

The MFP 10 can control the display according to whether or not there is a user who carries out a print job.

### (D) A case in which the user A carries out a print job, the user B carries out a FAX job, and the user C carries out a scan mail job

Instead of the print job of the user C in the case (C), there is also a case in which the user C approaches the MFP 10 for a scan mail (mail transmission of a scan image).

The user A generates a print job.

The user B approaches the MFP 10 for a copy job.

The job management section 16 registers a print job of the user A before the processing in Fig. 4 is started.

If the authentication section 17 detects the user B, the authentication section 17 refers to a registration of job (ACT A2). The authentication section 17 calculates the addition of the number of users (ACT A3), and determines that the number of users is 3 (ACT A4).

The authentication section 17 determines whether or not the user B is registered through the face authentication (ACT A5, ACT A6 and ACT A7).

The determination section 18 determines whether or not there is other operation different from the print operation (ACT A8).

The determination section 18 determines a scan, a FAX transmission/reception and a mail transmission/reception (YES in ACT A9).

The display section 19 displays the user B and an available operation name (ACT A10, Fig. 9).

The user C approaches the MFP 10 for a scan mail.

During the execution of the print job of the user A, and during the execution of the processing of the user B, the authentication section 17 starts the processing in ACT A1 for the user C through a detection of the user C.

The authentication section 17 executes processing from ACT A2 to ACT A9 without carrying out branching processing in each processing. The display section 19 updates display content as shown in Fig. 8 (ACT A10).

For example, the user B sends a FAX when the User A is carrying out the print operation. The user C sends a FAX after the user B.

For example, 1000 pieces of documents are set in the ADF 33. The ADF 33 conveys the document one by one. The ADF 33 stops a document at a given position temporarily.

The scanner 11 images the reflected light on the CCD sensor 201. The CCD sensor 201 accumulates charge for each color. The scanner 11 generates a color signal for each pixel.

The page memory 205 stores an image. An image scanned through an operation on the control panel 20 is mailed to an address.

### (E) A case in which the users A, B and C only carry out print jobs

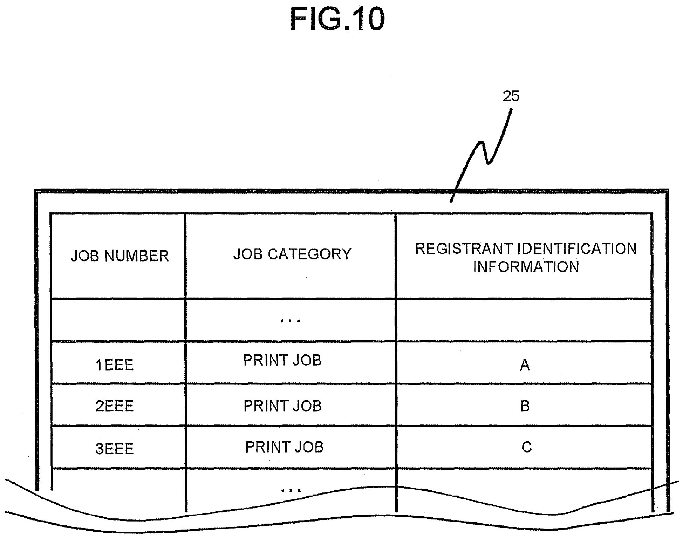

Fig. 10 is a diagram illustrating other registration job of the job management section 16. The reference numerals described above represent same components as shown in Fig. 1∼Fig. 9.

The job management section 16 registers three print jobs in the OS through the reception of a print request.

The MFP 10 doesn't start the user detection processing in Fig. 4.

The print section 13 forms electrostatic latent images of four colors respectively on the corresponding drum 132. The print section 13 develops the electrostatic latent images of four colors respectively with corresponding toner.

Each of the image forming sections 131C, 131M, 131Y and 131K transfers a corresponding toner image to the belt 30.

The print section 13 forms monochrome toner images on the belt 130 sequentially from the upstream side to the downstream side in the anticlockwise direction V of the belt 130.

The secondary transfer device 137 transfers a four-color toner image to the sheet P. The fixing device 138 fixes the four-color toner image on the sheet P.

The MFP 10 prints and outputs a sheet for each user.

### (F) A case in which the user A carries out a FAX job, the user B carries out a FAX job, and the user C carries out a mail reception job

The user A approaches the MFP 10 for a fax transmission job.

The user B approaches the MFP 10 for a fax transmission job.

The user C approaches the MFP 10 for a mail check.

If the authentication section 17 detects the user A (ACT A1), the authentication section 17 refers to a registration of job (ACT A2).

Fig. 6B is a diagram illustrating a second registration job of the job management section of the image forming apparatus according to the embodiment. The reference numerals described above represent same components as those shown in Fig. 1∼Fig. 5.

The job management section 16 doesn't register any one print job.

In a case in which the authentication section 17 detects that 3 persons are in the visual field range F simultaneously, the authentication section 17 determines that the number of the users is 3.

According to a determination on whether or not the user A is registered through the face authentication, the authentication section 17 displays a guide of print, scan, FAX and mail as well as the user name A.

The user A operates a FAX transmission button. After completion, the user B operates the FAX transmission button.

Both the FAX transmission of the user A and the FAX transmission of the user B are buffered.

During a period of time the users A and B are waiting for the transmission, the user C checks a mail reception.

As stated above in detail, the MFP 10 promotes the users waiting for operations to access a FAX, a mail and a file inside the MFP 10 and the like, and in this way, the waiting user and a user who carries out a print job or a scan job can carry out operations simultaneously.

In this way, it is possible to run the plurality of devices that can carry out compound control operations efficiently.

The user can use a scan, FAX, and mail job during a print job without waiting for orders. The user doesn't wait operations until the print job that is being executed is ended.

The operation efficiency of devices is improved.

The processing as shown in Figs 1∼10 is exemplified. The image forming apparatus according to the present embodiment is not limited to the processing disclosed in the accompanying drawings.

In the embodiment described above, the MFP 10 may control a tilt and a pan of the camera 22 to rotate.
The camera 22 may be arranged separately from the MFP 10. The MFP 10 may obtain users who approach the vicinity of the MFP 10 through a reception of an image from the separated camera 22.

The MFP 10 may execute the personal authentication through an RFID (radio frequency identification) or a wireless medium such as a wireless tag.

The display section 19 and the speaker 26 may be arranged independently from the control panel 20.

A piece of communication software in accordance with a communication protocol on the network 23 may be installed in the storage 14. A mailer for transmitting and receiving mails may be installed in the storage 14.

An SSD (solid state drive) may be used in the storage 14.

The storage 14 may includes a memory interface 224.

A piece of browser software on the window 140 of the control panel 20 may be installed in the storage 14. The job management section 16 may register and manage a browsing job.

The MFP 10 may connect a USB (Universal Serial Bus) memory with the memory interface 224.

The job management section 16 may manage a job printing a file from the memory interface 224. The job management section 16 may store scanned data file in the USB memory.

In the embodiment described above, the MFP 10 may be provided with a finisher and may be connected with the finisher. The MFP 10 may contain and display a finisher processing in a candidate of a job category.

The priorities of the image forming apparatus, the image forming method and the recording medium according to the embodiment are not damaged for the implementations which are only performed with these changes.

The novel embodiments described herein may be embodied in a variety of other forms. The accompanying claims are intended to cover such forms or modifications as would fall within the scope of the invention.

## Claims

1. An image forming apparatus (10), comprising:
a plurality of devices (11), (12), (13), (14) configured to carry out different jobs simultaneously;
a camera (22) configured to image a user around the image forming apparatus (10);
a database (215) configured to store a face image, a user identification information and a user feature information in association with each other;
a job management section configured to store the user identification information of a user of a job carried out by more than one of the plurality of devices (11), (12), (13), (14) in association with a job category;
an authentication section configured to perform face authentication based on an image from the camera and the user face image in the database, identify a user in the vicinity of the image forming apparatus, and output the user identification information of the user in the vicinity of the image forming apparatus;
a determination section configured to determine second user identification information different from first user identification information indicating the user of the job carried out by the plurality of devices (11), (12), (13), (14) and the job category that can processed in parallel with the job carried out by the plurality of devices (11), (12), (13), (14); and
a display section configured to display the second user identification information and the job category of the job that can be processed in parallel with the job carried out by the plurality of devices (11), (12), (13), (14); and,
a controller (21, 209),configured to carry out the instructed job when the user instructs to carry out the job that can be processed in parallel with the job carried out by the plurality of devices (11), (12), (13), (14).

2. The image forming apparatus according to claim 1, further comprising:
a control panel, wherein
the display section is arranged on the control panel, and
when the first user identification information, the second user identification information different from the first user identification information and the job category of the job that can be used together with the job carried out by the plurality of devices (11), (12), (13), (14) is determined,
the determination section (18) causes the display section (19) to display the second identification information and the job category of the job that can be processed in parallel with the job carried out by the plurality of devices (11), (12), (13), (14).

3. The image forming apparatus according to claim 1 or 2, further comprising:
a speaker configured to output the user identification information and the job category of the job that can be used together with the job carried out by the plurality of devices (11), (12), (13), (14) through sound.

4. The image forming apparatus according to any one of claims 1 to 3, wherein the determination section ranks orders for the user identification information of a plurality of users obtained from the determination result.

5. A display method of the image forming apparatus, (10), including:
imaging a user around the image forming apparatus (10);
storing a face image, a user identification information and a user feature information in association with each other in a database;
storing a user identification information of a user of a job carried out by more than one of a plurality of devices (11), (12), (13), (14) in association with a job category;
performing face authentication based on an image of the user around the image forming apparatus (10) and a user face image in the database and outputting the user identification information of the user in the vicinity of the image forming apparatus (10);
determining second user identification information different from first user identification information indicating the user of the job carried out by a plurality of devices (11), (12), (13), (14) of the image forming apparatus (10), and a job category of a job that can be processed in parallel with the job carried out by the plurality of devices (11), (12), (13), (14) ;
displaying the second user identification information and the job category of the job that can be processed in parallel with the job carried out by the plurality of devices (11), (12), (13), (14); and,
carrying out the instructed job when the user instructs to carry out the job that can processed in parallel with the job carried out by the plurality of devices (11), (12), (13), (14).

6. The method according to claim 5, wherein
when a plurality of second user identification information are determined, the plurality of second user identification information are ranked and displayed.

## Patentansprüche

1. Bildgebungsvorrichtung (10), Folgendes umfassend:
mehrere Geräte (11), (12), (13), (14), die dafür konfiguriert sind, gleichzeitig verschiedene Aufträge auszuführen,
eine Kamera (22), die dafür konfiguriert ist, einen Benutzer in der Umgebung der Bildgebungsvorrichtung (10) abzubilden,
eine Datenbank (215), die dafür konfiguriert ist, ein Gesichtsbild, Benutzeridentifizierungsinformationen und Benutzermerkmalinformationen in Verbindung miteinander zu speichern,
einen Auftragsverwaltungsabschnitt, der dafür konfiguriert ist, die Benutzeridentifizierungsinformationen eines Benutzers eines Auftrags, der von mehr als einem der mehreren Geräte (11), (12), (13), (14) ausgeführt wird, in Verbindung mit einer Auftragskategorie zu speichern,
einen Authentifizierungsabschnitt, der dafür konfiguriert ist, basierend auf einem Bild von der Kamera und dem Benutzergesichtsbild in der Datenbank eine Gesichtsauthentifizierung durchzuführen, einen Benutzer in der Nähe der Bildgebungsvorrichtung zu identifizieren und die Benutzeridentifizierungsinformationen des Benutzers in der Nähe der Bildgebungsvorrichtung auszugeben,
einen Bestimmungsabschnitt, der dafür konfiguriert ist, zweite Benutzeridentifizierungsinformationen zu bestimmen, die sich von den ersten Benutzeridentifizierungsinformationen unterscheiden und den Benutzer des Auftrags, der von den mehreren Geräten (11), (12), (13), (14) ausgeführt wird und die Auftragskategorie angeben, die parallel mit dem Auftrag, der von den mehreren Geräten (11), (12), (13), (14) ausgeführt wird, verarbeitet werden kann, und
einen Anzeigeabschnitt, der dafür konfiguriert ist, die zweiten Benutzeridentifizierungsinformationen und die Auftragskategorie des Auftrags, der parallel mit dem Auftrag ausgeführt werden kann, der von den mehreren Geräten (11), (12), (13), (14) ausgeführt wird, anzuzeigen, und
eine Steuerung (21, 209), die dafür konfiguriert ist, den angewiesenen Auftrag auszuführen, wenn der Benutzer anweist, den Auftrag auszuführen, der parallel mit dem Auftrag ausgeführt werden kann, der von den mehreren Geräten (11), (12), (13), (14) ausgeführt wird.

2. Bildgebungsvorrichtung nach Anspruch 1, ferner Folgendes umfassend:
eine Steuertafel, wobei der Anzeigeabschnitt auf der Steuertafel angeordnet ist, und
wenn die ersten Benutzeridentifizierungsinformationen, die zweiten Benutzeridentifizierungsinformationen, die sich von den ersten Benutzeridentifizierungsinformationen unterscheiden, und die Auftragskategorie des Auftrags, der zusammen mit dem Auftrag verwendet werden kann, der von den mehreren Geräten (11), (12), (13), (14) ausgeführt wird, bestimmt sind,
der Bestimmungsabschnitt (18) den Anzeigeabschnitt (19) veranlasst, die zweiten Identifizierungsinformationen und die Auftragskategorie des Auftrags, der parallel mit dem Auftrag verarbeitet werden kann, der von den mehreren Geräten (11), (12), (13), (14) ausgeführt wird, anzuzeigen.

3. Bildgebungsvorrichtung nach Anspruch 1 oder 2, ferner Folgendes umfassend:
einen Lautsprecher, der dafür konfiguriert ist, die Benutzeridentifizierungsinformationen und die Auftragskategorie des Auftrags, der zusammen mit dem Auftrag verarbeitet werden kann, der von den mehreren Geräten (11), (12), (13), (14) ausgeführt wird, durch Töne auszugeben.

4. Bildgebungsvorrichtung nach einem der Ansprüche 1 bis 3, wobei der Bestimmungsabschnitt Rangfolgen für die Benutzeridentifizierungsinformationen mehrerer Benutzer festlegt, die aus dem Bestimmungsergebnis gewonnen werden.

5. Anzeigeverfahren für die Bildgebungsvorrichtung (10), Folgendes beinhaltend:
Abbilden eines Benutzers in der Umgebung der Bildgebungsvorrichtung (10),
Speichern eines Gesichtsbildes, von Benutzeridentifizierungsinformationen und Benutzermerkmalinformationen in Verbindung miteinander in einer Datenbank,
Speichern von Benutzeridentifizierungsinformationen eines Benutzers eines Auftrags, der von mehr als einem von mehreren Geräten (11), (12), (13), (14) ausgeführt wird, in Verbindung mit einer Auftragskategorie,
Durchführen einer Gesichtsauthentifizierung basierend auf einem Bild des Benutzers in der Umgebung der Bildgebungsvorrichtung (10) und eines Benutzergesichtsbildes in der Datenbank und Ausgeben der Benutzeridentifizierungsinformationen des Benutzers in der Nähe der Bildgebungsvorrichtung (10),
Bestimmen zweiter Benutzeridentifizierungsinformationen, die sich von den ersten Benutzeridentifizierungsinformationen unterscheiden und den Benutzer des Auftrags, der von den mehreren Geräten (11), (12), (13), (14) der Bildgebungsvorrichtung (10) ausgeführt wird, und eine Auftragskategorie eines Auftrags angeben, der parallel mit dem Auftrag, der von den mehreren Geräten (11), (12), (13), (14) ausgeführt wird, verarbeitet werden kann, und
Anzeigen der zweiten Benutzeridentifizierungsinformationen und der Auftragskategorie des Auftrags, der parallel mit dem Auftrag ausgeführt werden kann, der von den mehreren Geräten (11), (12), (13), (14) ausgeführt wird, und
Ausführen des angewiesenen Auftrags, wenn der Benutzer anweist, den Auftrag auszuführen, der parallel mit dem Auftrag ausgeführt werden kann, der von den mehreren Geräten (11), (12), (13), (14) ausgeführt wird.

6. Verfahren nach Anspruch 5, wobei,
wenn mehrere zweite Benutzeridentifizierungsinformationen bestimmt werden, die mehreren zweiten Benutzeridentifizierungsinformationen in eine Rangfolge gebracht und angezeigt werden.

## Revendications

1. Appareil de formation d'image (10), comprenant :
une pluralité de dispositifs (11), (12), (13), (14) configurés de manière à mettre en œuvre différents tâches, simultanément ;
une caméra (22) configurée de manière à imager un utilisateur à proximité de l'appareil de formation d'image (10) ;
une base de données (215) configurée de manière à stocker une image de visage, des informations d'identification d'utilisateur et des informations de caractéristiques d'utilisateur en association les unes avec les autres ;
une section de gestion de tâche configurée de manière à stocker les informations d'identification d'utilisateur d'un utilisateur d'une tâche mise en œuvre par plus d'un dispositif de la pluralité de dispositifs (11), (12), (13), (14) en association avec une catégorie de tâche ;
une section d'authentification configurée de manière à mettre en œuvre une authentification de visage sur la base d'une image provenant de la caméra et de l'image de visage d'utilisateur dans la base de données, à identifier un utilisateur à proximité de l'appareil de formation d'image, et à fournir en sortie les informations d'identification d'utilisateur de l'utilisateur situé à proximité de l'appareil de formation d'image ;
une section de détermination configurée de manière à déterminer des secondes informations d'identification d'utilisateur différentes des premières informations d'identification d'utilisateur indiquant l'utilisateur de la tâche mise en œuvre par la pluralité de dispositifs (11), (12), (13), (14) et la catégorie de tâche de la tâche qui peut être traitée en parallèle avec la tâche mise en œuvre par la pluralité de dispositifs (11), (12), (13), (14) ;
une section d'affichage configurée de manière à afficher les secondes informations d'identification d'utilisateur et la catégorie de tâche de la tâche qui peut être traitée en parallèle avec la tâche mise en œuvre par la pluralité de dispositifs (11), (12), (13), (14) ; et
un contrôleur (21, 209) configuré de manière à mettre en œuvre la tâche ordonnée lorsque l'utilisateur ordonne la mise en œuvre de la tâche qui peut être traitée en parallèle avec la tâche mise en œuvre par la pluralité de dispositifs (11), (12), (13), (14).

2. Appareil de formation d'image selon la revendication 1, comprenant en outre :
un panneau de commande, dans lequel
la section d'affichage est agencée sur le panneau de commande ; et
dans lequel, lorsque les premières informations d'identification d'utilisateur, les secondes informations d'identification d'utilisateur, différentes des premières informations d'identification d'utilisateur, et la catégorie de tâche de la tâche qui peut être utilisée conjointement avec la tâche mise en œuvre par la pluralité de dispositifs (11), (12), (13), (14), sont déterminées :
la section de détermination (18) amène la section d'affichage (19) à afficher les secondes informations d'identification d'utilisateur et la catégorie de tâche de la tâche qui peut être traitée en parallèle avec la tâche mise en œuvre par la pluralité de dispositifs (11), (12), (13), (14).

3. Appareil de formation d'image selon la revendication 1 ou 2, comprenant en outre :
un haut-parleur configuré de manière à fournir en sortie les informations d'identification d'utilisateur, et la catégorie de tâche de la tâche qui peut être utilisée conjointement avec la tâche mise en œuvre par la pluralité de dispositifs (11), (12), (13), (14), par le biais d'un son.

4. Appareil de formation d'image selon l'une quelconque des revendications 1 à 3, dans lequel la section de détermination classe des ordres pour les informations d'identification d'utilisateur d'une pluralité d'utilisateurs, obtenues à partir du résultat de l'étape de détermination.

5. Procédé d'affichage de l'appareil de formation d'image (10), incluant :
imager un utilisateur à proximité de l'appareil de formation d'image (10) ;
stocker une image de visage, des informations d'identification d'utilisateur et des informations de caractéristiques d'utilisateur en association les unes avec les autres, dans une base de données ;
stocker des informations d'identification d'utilisateur d'un utilisateur d'une tâche mise en œuvre par plus d'un dispositif de la pluralité de dispositifs (11), (12), (13), (14) en association avec une catégorie de tâche ;
mettre en œuvre une authentification de visage sur la base d'une image de l'utilisateur à proximité de l'appareil de formation d'image (10) et d'une image de visage d'utilisateur dans la base de données, et fournir en sortie les informations d'identification d'utilisateur de l'utilisateur situé à proximité de l'appareil de formation d'image (10) ;
déterminer des secondes informations d'identification d'utilisateur différentes de premières informations d'identification d'utilisateur indiquant l'utilisateur de la tâche mise en œuvre par une pluralité de dispositifs (11), (12), (13), (14) de l'appareil de formation d'image (10), et une catégorie de tâche d'une tâche qui peut être traitée en parallèle avec la tâche mise en œuvre par la pluralité de dispositifs (11), (12), (13), (14);
afficher les secondes informations d'identification d'utilisateur et la catégorie de tâche de la tâche qui peut être traitée en parallèle avec la tâche mise en œuvre par la pluralité de dispositifs (11), (12), (13), (14) ; et
mettre en œuvre la tâche ordonnée lorsque l'utilisateur ordonne la mise en œuvre de la tâche qui peut être traitée en parallèle avec la tâche mise en œuvre par la pluralité de dispositifs (11), (12), (13), (14).

6. Procédé selon la revendication 5, dans lequel,
lorsqu'une pluralité de secondes informations d'identification d'utilisateur est déterminée, la pluralité de secondes informations d'identification d'utilisateur est classée et affichée.
